# EUROPÄISCHE PATENTSCHRIFT

(11) **EP 1 220 996 B1**
(45) Veröffentlichungstag und Bekanntmachung des Hinweises auf die Patenterteilung: **16.03.2005**
(21) Anmeldenummer: 00956285.1
(22) Anmeldetag: 26.07.2000
(51) Int. Cl.: F16D 65/18, F16D 65/00

(54) **DRUCKLUFTBETÄTIGTE SCHEIBENBREMSE**
COMPRESSED AIR-OPERATED DISC BRAKE
FREIN A DISQUE A AIR COMPRIME

(30) Priorität: 29.09.1999 DE 19946680
(43) Veröffentlichungstag der Anmeldung: 10.07.2002
(73) Patentinhaber: KNORR-BREMSE SYSTEME FÜR NUTZFAHRZEUGE GMBH, 80809 München (DE)
(72) Erfinder: BAUMGARTNER, Hans, D-85368 Moosburg (DE)
(86) Internationale Anmeldenummer: PCT/EP2000/007154
(87) Internationale Veröffentlichungsnummer: WO 2001/023772

(56) Entgegenhaltungen:
- WO-A-97/13987
- US-A- 5 697 474

## Beschreibung

Die Erfindung bezieht sich auf eine druckluftbetätigte Scheibenbremse mit einem eine Bremsscheibe umfassenden Bremssattel, der an einer Seite mit einer Zuspannvorrichtung ausgestattet ist, die einen schwenkbar gelagerten Drehhebel aufweist, der mit der Druckstange eines Druckluftzylinders in Eingriff steht, wobei der Bremssattel mittels eines die Druckstange umgebenden Faltenbalges abgedichtet ist, und wobei der Bremssattel an der dem Druckluftzylinder zugewandten Seite einen eine Flanschöffnung begrenzenden Flansch zum Anschluß des Druckluftzylinders aufweist.

Die in Rede stehende druckluftbetätigte Scheibenbremse wird bevorzugt für Straßennutzfahrzeuge eingesetzt. Der Druckluftzylinder wird an dem Flansch des Bremssattels durch Gewindebolzen befestigt. Der die Druckstange, des Druckluftzylinders umgebende Faltenbalg verhindert, daß in den Innenraum des Bremssattels Feuchtigkeit oder Schmutz eindringt, wodurch die korrosionsempfindliche Betätigungsmechanik beschädigt würde. Der Faltenbalg ist so gestaltet, daß er an der dem Bremssattel zugewandten Seite eine ringförmige Dichtung aufweist. Damit wird eine ausreichende Abdichtung der Schnittstelle des Druckluftzylinders zum Bremssattel erreicht, jedoch nur, wenn der Druckluftzylinder montiert ist.

Der Druckluftzylinder wird nicht vom Hersteller der Bremse an den Bremssattel angeschlossen, sondern bei einem Achsenhersteller bei der Montage der Achsen oder bei einem Fahrzeughersteller bei der Montage der mit den Bremsen ausgestatteten Achse an ein Nutzfahrzeug. Dieser Umstand ist darauf zurückzuführen, daß erst in diesen Phasen die erforderliche Baugröße des Druckluftzylinders bestimmt werden kann. Daraus ergibt sich, daß auf dem gesamten Weg der Scheibenbremse vom Bremsenhersteller bis zum Achsenhersteller und gegebenenfalls auch bis zum Fahrzeughersteller die Flanschöffnung nur unzureichend abgedeckt ist. Dabei muß berücksichtigt werden, daß auch häufig die mit den Bremsen bestückten Achsen über einen längeren Zeitraum im Freien gelagert werden. Dadurch besteht die Gefahr, daß Wasser bzw. Feuchtigkeit in das Innere des Bremssattels eintritt, so daß es zu einer Korrosion kommt.

In der Praxis wird zum Schutz der Betätigungsmechanik die Flanschöffnung durch eine aufgeklebte Folie verschlossen. Damit wird verhindert, daß Fremdkörper in den Innenraum des Bremssattels eindringen, es ist jedoch kein Schutz gegen das Eindringen von Feuchtigkeit gegeben, insbesondere dann, wenn die mit den Bremsen bestückten Achsen im Freien gelagert werden. Außerdem kann die aufgeklebte Folie sehr leicht zerstört werden. Dadurch wird keine praxisgerechte Lösung erzielt. Wenn bekannt ist, daß die mit den Bremsen bestückten Achsen im Freien gelagert werden, wird normalerweise die Flanschöffnung des Bremssattels durch einen angeschraubten Kunststofflansch verschlossen, in den ein Abdichtelement integriert ist. Dadurch wird zwar die Flanschöffnung hinreichend abgedichtet, diese Lösung ist jedoch mit einem erheblichen Kostenaufwand verbunden, bedingt durch die zusätzlichen Bauteile sowie den Montage- und Demontageaufwand. Außerdem muß der Kunststofflansch entsorgt werden bzw. zum Bremsenhersteller zurücktransportiert werden.

Schließlich ist es aus der WO 97113987 noch bekannt, in die Flanschöffnung eine Dichtung einzusetzen, die eine zentrische Öffnung aufweist. In der Ruhestellung des Drehhebels kommt dieser in Kontakt mit der Dichtung, so daß eine Abdichtung erfolgt. Es ergeben sich relativ große Positionstoleranzen in der Zuordnung der Dichtfläche des Drehhebels zur Dichtlippe der Dichtung. Dadurch kann das Eindringen von Feuchtigkeit nicht mehr wirksam verhindert werden. Außerdem liegt die im Drehhebel sich befindende, kalottenförmige Aufnahme für die Druckstange des Druckluftzylinders außerhalb des geschützten Bereiches, so daß gerade diese besonders empfindliche Stelle bei längerer Lagerung korrodiert. Außerdem kann Feuchtigkeit bei der Montage des Druckluftzylinders ins Innere des Bremssattels gelangen.

Ausgehend von einem durch die WO 97/13987 vorbekannten Stand der Technik liegt der Erfindung die Aufgabe zugrunde, eine druckluftbetätigte Scheibenbremse so zu gestalten, daß der Innenraum des Bremssattels und die darin montierte Betätigungsmechanik bei noch nicht angeschlossenem Druckluftzylinder während des Transportes und der Lagerung gegen ein Eindringen von Schmutz und Feuchtigkeit geschützt ist. Möglichst sollen zudem zur Montage des Druckluftzylinders keine zusätzlichen Arbeitsgänge erforderlich sein und darüber hinaus keine Bauteile entsorgt bzw. zurücktransportiert werden müssen.

Die gestellte Aufgabe wird nach dem Kennzeichen des Anspruchs 1 dadurch gelöst, daß in die Flanschöffnung des Bremssattels eine zunächst geschlossene, jedoch Sollbruchstellen aufweisende Abdeckkappe eingesetzt ist.

Durch die in die Flanschöffnung eingesetzte, vollkommen geschlossene Abdeckkappe ist auch über einen längeren Zeitraum sichergestellt, daß selbst bei einer Lagerung der Scheibenbremse im Freien kein Schmutz oder Feuchtigkeit in das Innere des Bremssattels eindringt, da die Abdeckkappe die Flanschöffnung vollkommen abdeckt. Da sie mit Sollbruchstellen versehen ist, kann die Abdeckkappe entlang dieser Stellen aufgerissen werden. Obwohl dies auch vor der Montage des Druckluftzylinders erfolgen könnte, erfolgt das Aufreißen spätestens dann, wenn die Druckstange des Druckluftzylinders zum ersten Mal ausgefahren wird. Die Funktion der Scheibenbremse wird durch die aufgerissene Abdeckkappe nicht behindert. Da sie in der Flanschöffnung verbleiben kann, entfällt eine Entsorgung bzw. der Rücktransport zum Bremsenhersteller. Nach der Montage des Druckluftzylinders dichtet die ringförmige Dichtung des Faltenbalges den Bremssattel in der gewohnten Weise ab.

Besonders vorteilhaft ist, wenn die Abdeckkappe gegenüber der Außenfläche des Flansches nicht vorsteht, da sie die Montage des Druckluftzylinders nicht behindert.

Es ist besonders vorteilhaft, wenn die Abdeckkappe kraftschlüssig in die Flanschöffnung eingesetzt ist. Es entfallen dann zusätzliche Sicherungselemente, die einen Montage- und Kostenaufwand hervorrufen würden. Durch die beim Einsetzen sich aufbauenden Rückstellkräfte ist wirksam verhindert, daß die Abdeckkappe beim Transport der Scheibenbremse aus der Flanschöffnung herausfällt. Dieser Kraftschluß zwischen dem äußeren Rand der Abdeckkappe und der Flanschöffnung läßt sich besonders einfach erreichen, wenn die Abdeckkappe aus einem elastischen Material gefertigt ist, beispielsweise aus einem Elastomer oder einem elastomerartigen Kunststoff.

Die Sollbruchstellen lassen sich fertigungstechnisch in einfachster Weise erreichen, wenn sie als Schwächungslinie beispielsweise in Form von Vertiefungen, Kerben und dergleichen gestaltet sind. Da der mittlere Bereich nach der Montage des Druckluftzylinders für die Druckstange frei sein muß, ist es zweckmäßig, wenn die Schwächungslinien vom Mittelpunkt der kreisrunden Abdeckkappe radial nach außen verlaufen, wobei die Schwächungslinien dann in einem gleichen Winkelabstand zueinander stehen.

Damit die Abdeckkappe ausschließlich entlang der Sollbruchstellen aufgerissen wird, ist vorgesehen, daß die Abdeckkappe im Anschluß an die der äußeren Umfangfläche zugewandten Enden der Sollbruchstellen eine ringförmige Wulst aufweist. Diese Wulst ist sinngemäß wie eine Verstärkung zu sehen. Damit der äußere Rand der Abdeckkappe äußerst stabil ist, ist vorgesehen, daß dieser Randbereich U-förmig ausgebildet ist und daß darin ein metallischer Versteifungsring eingesetzt ist. Dieser metallische Versteifungsring ist im Querschnitt winkelförmig ausgebildet, so daß der zur Mitte hin gerichtete Steg einen ringförmigen Ansatz hintergreift. Damit die Abdeckkappe die Montage des Druckluftzylinders nicht behindert, ist es zweckmäßig, wenn sie gegenüber der äußeren Fläche des Flansches in Richtung zur Bremsscheibe verspringt.

Anhand der beiliegenden Zeichnungen wird die Erfindung noch näher erläutert.

Es zeigen:
- Figur 1: die in die Flanschöffnung eingesetzte Abdeckkappe mit dem Drehhebel in Schnittdarstellung,
- Figur 2: die Abdeckkappe in einer Draufsicht,
- Figur 3: einen Schnitt längs der Linie III-III in der Figur 2
- Figur 4: den Druckluftzylinder mit dem Anschlußflansch und dem Drehhebel in Schnittdarstellung.

Aus Gründen der vereinfachten Darstellung ist in den Figuren die druckluftbetätigte Scheibenbremse als Ganzes nicht dargestellt.

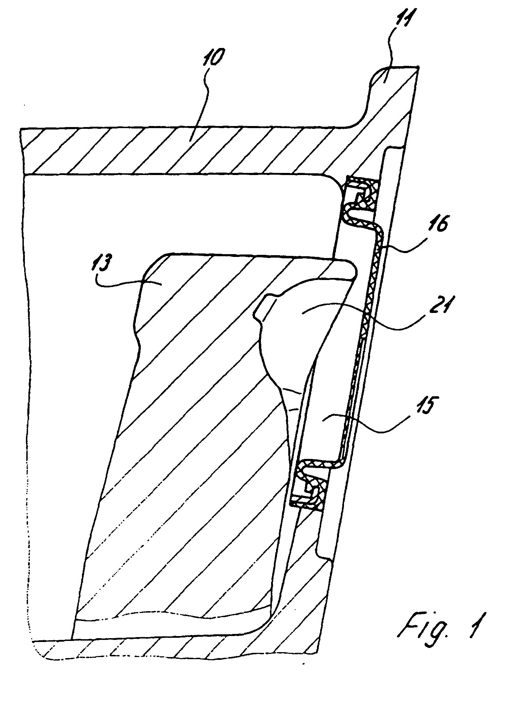

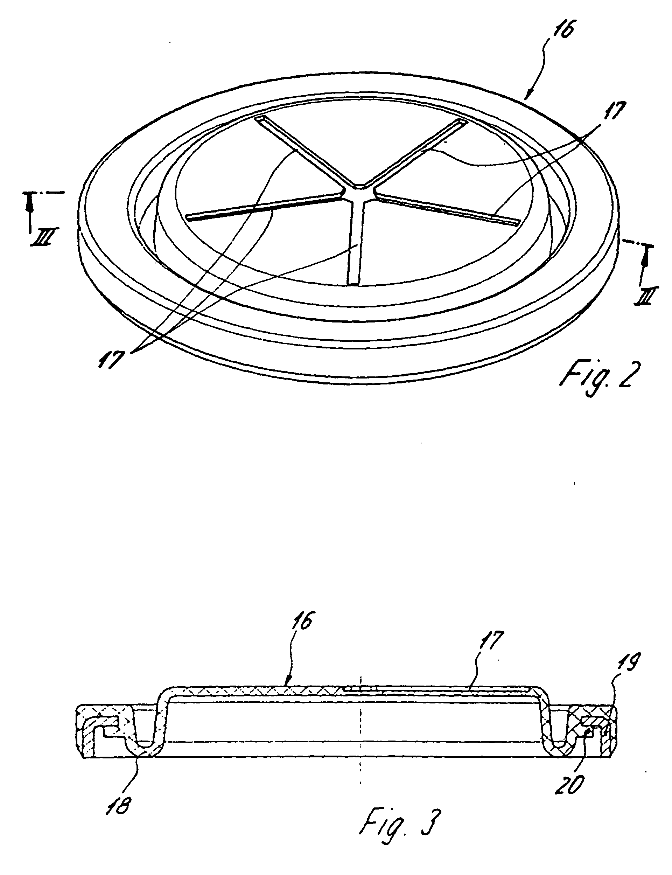

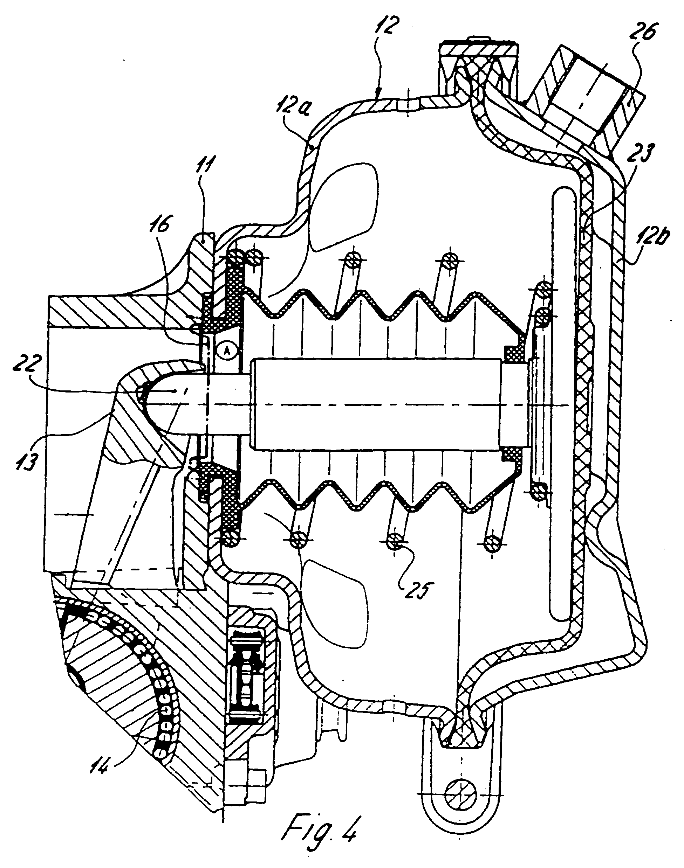

Die Figur 1 zeigt, daß der andeutungsweise dargestellte Bremssattel 10 einen Flansch 11 aufweist, um daran gemäß der Figur 4 einen Druckluftzylinder 12 anzuschließen. Im Bremssattel 10 ist ein Drehhebel 13 mittels eines nicht näher erläuterten Lagers 14 schwenkbar gelagert. In die Flanschöffnung 15 ist eine anhand der Figuren 2 und 3 noch näher erläuterte Abdeckkappe 16 schließend eingesetzt. Wie die Figuren 1-3 zeigen, ist die Abdeckkappe im dargestellten Zustand vollflächig geschlossen. Dieser Zustand ist dann gegeben, wenn entgegen der Darstellung nach der Figur 4 der Druckluftzylinder 12 noch nicht an den Flansch 11 des Bremssattels 10 angeschlossen ist. Die Abdeckkappe 16 ist im dargestellten Ausführungsbeispiel mit fünf jeweils eine Sollbruchstelle bildenden Schwächungslinien 17 versehen, die durch Vertiefungen gebildet sind. Die Schwächungslinien 17 verlaufen vom Mittelpunkt der kreisrunden Abdeckkappe 16 in Richtung zum äußeren Rand. Sie stehen außerdem in einem gleichen Winkelabstand zueinander.

An die äußeren, dem Umfang der Abdeckkappe 16 zugeordneten Ränder schließt sich eine ringförmige Wulst 18 an, die als Verstärkung anzusehen ist. Der äußere Rand der Abdeckkappe 16 ist U-förmig gestaltet. Dabei zeigt die offene Seite in Richtung zur nicht dargestellten Bremsscheibe, wenn die Abdeckkappe 16 in die Flanschöffnung 15 eingesetzt ist. In diesen äußeren Rand ist ein metallischer Versteifungsring 19 eingesetzt, der im Querschnitt winkelförmig ausgebildet ist und dessen zur Mitte gerichteter Schenkel einen ringförmigen Ansatz 20 hintergreift. Die Abdeckkappe 16 ist aus einem elastischen Material, vorzugsweise einem Elastomer oder einem elastomerartigen Kunststoff gefertigt.

Von der im Bremssattel 10 installierten Betätigungsmechanik ist in den Figuren 1 und 4 nur der Drehhebel 13 dargestellt. An der dem Druckluftzylinder 12 zugewandten Seite ist dieser mit einer kalottenartigen Ausnehmung 21 versehen, die in der Kontur der Flanschöffnung 15 liegt. In diese kalottenartige Ausnehmung 21 greift das zugeordnete, entsprechend gestaltete Ende einer zweiteiligen Druckstange 22 ein. Der Druckluftzylinder 12 besteht im wesentlichen aus den beiden Gehäuseteilen 12a, 12b, einer in der Trennfuge eingeklemmten Membran 23, einem die Druckstange 22 umgebenden Faltenbalg 24 und einer Rückholfeder 25. Durch die Membran 23 ist das aus den Gehäuseteilen 12a und 12b gebildete Gehäuse luftdicht in zwei Kammern unterteilt. Die äußere, dem Bremssattel 10 abgewandte Kammer ist mit einem Druckluftanschluß 26 ausgestattet. Zur einwandfreien Abdichtung des Innenraumes des Bremssattels 10 ist das zugewandte Ende des Faltenbalges 24 nach Art einer Dichtung gestaltet, die den eine Öffnung begrenzenden Rand eines Gehäuseteiles 12a U-förmig umgreift.

Vom Hersteller der druckluftbetätigten Scheibenbremse wird der Bremssattel so geliefert, wie er in der Figur 1 dargestellt ist, d. h. der Druckluftzylinder 12 ist noch nicht an den Flansch 10 angeschlossen. Die in sich geschlossene Abdeckkappe 16 dichtet die Flanschöffnung 15 hermetisch ab, so daß auch bei einer längeren Lagerung im Freien weder Schmutzpartikel noch Feuchtigkeit in das Innere des Bremssattels 10 eindringen können. Die Figur 1 zeigt, daß zur Montage des Druckluftzylinders 12 keine zusätzlichen Arbeiten notwendig sind, da die Abdeckkappe 16 in der Flanschöffnung 15 verbleibt. Bei der Montage kann zwar die Abdeckkappe 16 entlang den Schwächungslinien bzw. den Schwächungszonen 17 aufgerissen werden, es ist jedoch nicht erforderlich, da dies spätestens dann erfolgt, wenn die Druckstange 22 ausgefahren wird. Beim weiteren Betrieb der druckluftbetätigten Scheibenbremse stört die Abdeckkappe 16 nicht. Bei der Ausführung nach der Figur 1 ist der Flansch 11 gegen die Vertikale geneigt, während er bei der Ausführung nach der Figur 4 in vertikaler Richtung verläuft.

Die Erfindung ist nicht auf das dargestellte Ausführungsbeispiel beschränkt. Wesentlich ist das Einsetzen der Abdeckkappe 16 in die Flanschöffnung 15, die das nachträgliche Anbringen des Druckluftzylinder 12 nicht behindert, und daß spätestens bei der Inbetriebnahme der Scheibenbremse die Abdeckkappe entlang von Sollbruchstellen aufgerissen wird.

## Patentansprüche

1. Druckluftbetätigte Scheibenbremse mit einem eine Bremsscheibe umfassenden Bremssattel (10), der an einer Seite mit einer Zuspannvorrichtung ausgestattet ist, die einen schwenkbar gelagerten Drehhebel (13) aufweist, der mit einer Druckstange (22) eines Druckluftzylinders (12) in Eingriff steht, wobei der Bremssattel (10) mittels eines die Druckstange (22) umgebenden Faltenbalges (24) abgedichtet ist, und der Bremssattel (10) an der dem Druckluftzylinder (12) zugewandten Seite einen eine Flanschöffnung (15) begrenzenden Flansch (11) zum Anschluß des Druckluftzylinders (12) aufweist, **dadurch gekennzeichnet, daß** in die Flanschöffnung (15) des Bremssattels (10) eine zunächst geschlossene, jedoch Sollbruchstellen (17) aufweisende Abdeckkappe (16) eingesetzt ist.

2. Druckluftbetätigte Scheibenbremse nach Anspruch 1, **dadurch gekennzeichnet, daß** die Abdeckkappe (16) gegenüber der Außenfläche des Flansches (11) nicht vorsteht.

3. Druckluftbetätigte Scheibenbremse nach Anspruch 1, **dadurch gekennzeichnet, daß** die Abdeckkappe (16) derart in die Flanschöffnung (15) des Bremssattels (10) eingesetzt ist, daß nach der Montage des Druckluftzylinders (12) durch Ausfahren seiner Druckstange (22) die Abdeckkappe (16) entlang der Sollbruchstellen (17) aufreißbar ist.

4. Druckluftbetätigte Scheibenbremse nach einem oder mehreren der Ansprüche 1-3, **dadurch gekennzeichnet, daß** die Abdeckkappe (16) kraftschlüssig in die Flanschöffnung (15) eingesetzt ist.

5. Druckluftbetätigte Scheibenbremse nach einem oder mehreren der Ansprüche 1-4, **dadurch gekennzeichnet, daß** die Abdeckkappe (16) aus einem elastischen Material, vorzugsweise aus einem Elastomer oder einem elastomerartigen Kunststoff gefertigt ist.

6. Druckluftbetätigte Scheibenbremse nach einem oder mehreren der vorhergehenden Ansprüche 1-5, **dadurch gekennzeichnet, daß** die Sollbruchstellen durch Schwächungslinien (17) gebildet sind, die sich vom mittleren Bereich der kreisrunden Abdeckkappe (16) in Richtung zum äußeren Rand erstrecken.

7. Druckluftbetätigte Scheibenbremse nach einem oder mehreren der vorhergehenden Ansprüche 1-6, **dadurch gekennzeichnet, daß** die Sollbruchstellen (17) in einem gleichen Winkelabstand zueinander stehen.

8. Druckluftbetätigte Scheibenbremse nach einem oder mehreren der vorhergehenden Ansprüche 1-7, **dadurch gekennzeichnet, daß** die Abdeckkappe /16) im Anschluß an die der äußeren Umfangsfläche zugewandten Enden der Sollbruchstellen (17) eine ringförmige Wulst (18) aufweist.

9. Druckluftbetätigte Scheibenbremse nach einem oder mehreren der vorhergehenden Ansprüche 1-8, **dadurch gekennzeichnet, daß** der äußere Randbereich der Abdeckkappe (16) U-förmig ausgebildet ist, daß die offene Seite, bezogen auf den Einbauzustand, zur Bremsscheibe gerichtet ist und daß in den U-förmigen Randbereich ein metallischer Versteifungsring (19) eingesetzt ist.

10. Druckluftbetätigte Scheibenbremse nach einem oder mehreren der vorhergehenden Ansprüche 1-9, **dadurch gekennzeichnet, daß** die Sollbruchstellen bzw. die Schwächungslinien (17) durch Vertiefungen gebildet sind.

11. Druckluftbetätigte Scheibenbremse nach einem oder mehreren der vorhergehenden Ansprüche 1-10, **dadurch gekennzeichnet, daß** der mittlere, die Schwächungslinien (17) aufweisende Bereich der Abdeckkappe (16) gegenüber der äußeren Fläche des Flansches (11) in Richtung zur Bremsscheibe versetzt ist.

## Claims

1. Compressed air actuated disc brake with a brake calliper (10) surrounding a brake disc, said calliper being provided with a brake application mechanism comprising a swivel-mounted rotary lever (13) which engages with a thrust rod (22) of a compressed air cylinder (12), the brake calliper (10) being sealed by means of a bellows (24) that surrounds the thrust rod (22) and having on its side facing the compressed air cylinder (12) a flange (11) that delimits a flange opening (15) for the connection of the compressed air cylinder (12),
**characterised in that**
a covering cap (16) is set into the flange opening (15) of the brake calliper (10), said cap being at first closed but having pre-formed break points (17).

2. Compressed air actuated disc brake according to Claim 1,
**characterised in that**
the covering cap (16) does not project beyond the outer surface of the flange (11).

3. Compressed air actuated disc brake according to Claim 1,
**characterised in that**
the covering cap (16) is set into the flange opening (15) in such manner that when the pressure cylinder (12) has been fitted, the covering cap (16) can be torn along its pre-formed break points (17) by extending the thrust rod (22) if the said cylinder.

4. Compressed air actuated disc brake according to one or more of Claims I to 3,
**characterised in that**
the covering cap (16) is held in the flange opening (15) by friction force.

5. Compressed air actuated disc brake according to one or more of Claims 1 to 4,
**characterised in that**
the covering cap (16) is made from an elastic material, preferably an elastomer or an elastomer-like plastic.

6. Compressed air actuated disc brake according to one or more of Claims 1 to 5,
**characterised in that**
the pre-formed break points (17) are formed as lines of weakness (17), which extend from the central area of the circular covering cap (16) towards the outer rim.

7. Compressed air actuated disc brake according to one or more of Claims 1 to 6,
**characterised in that**
the pre-formed break points (17) are spaced equal angular distances apart.

8. Compressed air actuated disc brake according to one or more of Claims 1 to 7,
**characterised in that**
the covering cap (16) has an annular bead (18) adjacent to the ends of the pre-formed break points (17) facing towards the outer circumferential area.

9. Compressed air actuated disc brake according to one or more of Claims 1 to 8,
**characterised in that**
the outer rim area of the covering cap (16) is U-shaped with its open side directed towards the brake disc in the assembled condition, and a metallic stiffening ring (19) is set into the said U-shaped rim.

10. Compressed air actuated disc brake according to one or more of Claims 1 to 9,
**characterised in that**
the pre-formed break points or lines of weakness (17) are formed by indentations.

11. Compressed air actuated disc brake according to one or more of Claims 1 to 10,
**characterised in that**
the central area of the covering cap (16) which has the lines of weakness (17) is offset towards the brake disc relative to the outer surface of the flange (11).

## Revendications

1. Frein à disque actionné par air comprimé, comportant un étrier (10) de frein qui embrasse un disque de frein et qui est équipé d'un côté d'un dispositif de serrage qui comprend un levier (13) tournant monté à pivotement qui est en prise avec une tige de pression (22) d'un cylindre (12) d'air comprimé, l'étrier (10) de frein étant rendu étanche au moyen d'un soufflet (24) entourant la tige de pression (22), et l'étrier (10) de frein comprenant, du côté tourné vers le cylindre (12) d'air comprimé, une bride (11), délimitant une ouverture (15) de bride, pour le raccordement du cylindre (12) d'air comprimé, **caractérisé en ce qu'**un obturateur (16), initialement fermé mais ayant des points (17) de rupture privilégiée, est inséré dans l'ouverture (15) de bride.

2. Frein à disque actionné par air comprimé suivant la revendication 1, **caractérisé en ce que** l'obturateur (16) ne dépasse pas de la surface extérieure de la bride (11).

3. Frein à disque actionné par air comprimé suivant la revendication 1, **caractérisé en ce que** l'obturateur (16) est inséré dans l'ouverture (15) de bride de l'étrier (10) de frein de telle sorte qu'à la suite du montage du cylindre (12) d'air comprimé, du fait du déploiement de la tige de pression (22) de ce cylindre, l'obturateur (16) peut être ouvert par arrachement le long des points (17) de rupture privilégiée.

4. Frein à disque actionné par air comprimé suivant une ou plusieurs des revendications 1 à 3, **caractérisé en ce que** l'obturateur (16) est inséré à force dans l'ouverture (15) de bride.

5. Frein à disque actionné par air comprimé suivant une ou plusieurs des revendications 1 à 4, **caractérisé en ce que** l'obturateur (16) est fabriqué en un matériau élastique, de préférence en un élastomère ou en une matière plastique du genre élastomère.

6. Frein à disque actionné par air comprimé suivant une ou plusieurs des revendications précédentes 1 à 5, **caractérisé en ce que** les points de rupture privilégiée sont formés par des lignes (17) d'affaiblissement qui s'étendent depuis la région centrale de l'obturateur (16) circulaire en direction du bord extérieur.

7. Frein à disque actionné par air comprimé suivant une ou plusieurs des revendications précédentes 1 à 6, **caractérisé en ce que** les points (17) de rupture privilégiée sont angulairement équidistants.

8. Frein à disque actionné par air comprimé suivant une ou plusieurs des revendications précédentes 1 à 7, **caractérisé en ce que** l'obturateur (16) comporte un bourrelet (18) annulaire en raccordement aux extrémités des points (17) de rupture privilégiée qui sont tournées vers la surface de pourtour extérieur.

9. Frein à disque actionné par air comprimé suivant une ou plusieurs des revendications précédentes 1 à 8, **caractérisé en ce que** la région de bord extérieur de l'obturateur (16) est réalisée en forme de U, **en ce que** le côté ouvert est dirigé, à l'état monté, vers le disque de frein, et **en ce qu'**une bague (19) de renforcement métallique est insérée dans la région de bord en forme de U.

10. Frein à disque actionné par air comprimé suivant une ou plusieurs des revendications précédentes 1 à 9, **caractérisé en ce que** les points de rupture privilégiée ou encore les lignes (17) d'affaiblissement sont formés par des dépressions.

11. Frein à disque actionné par air comprimé suivant une ou plusieurs des revendications précédentes 1 à 10, **caractérisé en ce que** la région centrale, comportant les lignes (17) d'affaiblissement, de l'obturateur (16) est décalée en direction du disque de frein par rapport à la surface extérieure de la bride (11).
